(19) Europäisches Patentamt
European Patent Office
Office européen des brevets

(11) **EP 3 504 454 B1**

(12) **EUROPÄISCHE PATENTSCHRIFT**

(45) Veröffentlichungstag und Bekanntmachung des Hinweises auf die Patenterteilung:
**03.06.2020  Patentblatt 2020/23**

(21) Anmeldenummer: **17740329.2**

(22) Anmeldetag: **05.07.2017**

(51) Int Cl.:
**F16D 33/08** *(2006.01)*

(86) Internationale Anmeldenummer:
**PCT/EP2017/066743**

(87) Internationale Veröffentlichungsnummer:
**WO 2018/036706 (01.03.2018 Gazette 2018/09)**

(54) **ÜBERWACHUNG EINER HYDRODYNAMISCHEN KUPPLUNG**

MONITORING A HYDRODYNAMIC CLUTCH

SURVEILLANCE D'UN ACCOUPLEMENT HYDROCINÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2016  DE 102016215857**

(43) Veröffentlichungstag der Anmeldung:
**03.07.2019  Patentblatt 2019/27**

(73) Patentinhaber: **Voith Patent GmbH**
**89522 Heidenheim (DE)**

(72) Erfinder: **HOFFELD, Harald**
**74564 Crailsheim (DE)**

(74) Vertreter: **Voith Patent GmbH - Patentabteilung**
**St. Pöltener Straße 43**
**89522 Heidenheim (DE)**

(56) Entgegenhaltungen:
WO-A2-2008/080483    DE-A1- 2 438 132
DE-A1-102010 022 848    US-A- 4 073 139

EP 3 504 454 B1

**Beschreibung**

Die Erfindung betrifft eine hydrodynamische Kupplung. Insbesondere betrifft die Erfindung die Überwachung der hydrodynamischen Kupplung.

Eine hydrodynamische Kupplung ist dazu eingerichtet, ein Drehmoment zwischen einer Eingangsseite und einer Ausgangsseite zu übertragen. Dazu ist die Eingangsseite mit einem Pumpenrad und die Ausgangsseite mit einem Turbinenrad verbunden, wobei Pumpenrad und Turbinenrad mittels eines hydrodynamischen Fluids miteinander gekoppelt sind. Wird die Kupplung mit Schlupf betrieben, beispielsweise während eines Hochlaufens, sodass sich die Ausgangsseite mit einer anderen Geschwindigkeit als die Eingangsseite dreht, wird das Fluid erwärmt. Übersteigt die Temperatur der Fluids einen vorbestimmten Wert, so muss die Kupplung in den Stillstand gebracht werden und auskühlen.

Es ist ein Verfahren bekannt, um auf der Basis einer Temperatur einer solchen Kupplung im Fall eines Lastwechsels einen erwarteten Temperaturverlauf vorherzusagen. In der Folge können eine Warnmeldung oder ein Stoppsignal bereitgestellt werden, um eine thermische Überlastung zu vermeiden.

Die Temperatur als Parameter eines Betriebszustands der hydrodynamischen Kupplung reicht aber für eine Beurteilung der Leistungsfähigkeit oder Standfestigkeit der Kupplung häufig nicht aus. Um einen sicheren Betrieb auf Dauer zu ermöglichen, muss insbesondere ein Füllstand der Kupplung an Fluid überwacht werden. Eine der vorliegenden Erfindung zu Grunde liegende Aufgabe besteht daher darin, einen Füllungsgrad der Kupplung mit Fluid auf möglichst einfache Weise bereitzustellen. Die Erfindung löst diese Aufgabe mittels der Gegenstände der unabhängigen Ansprüche. Unteransprüche geben bevorzugte Ausführungsformen wieder.

US 4 073 139 A zeigt eine füllungsgesteuerte hydrodynamische Kupplung.

Eine hydrodynamische Kupplung umfasst eine Eingangsseite und eine Ausgangsseite, deren Drehbewegungen mittels eines hydraulischen Fluids miteinander gekoppelt sind. Ein Verfahren zum Bestimmen eines Füllgrads der hydrodynamischen Kupplung mit dem Fluid umfasst Schritte des periodischen Abtastens einer Fluidtemperatur des hydraulischen Fluids; des Bestimmens einer der Kupplung zugeführten Wärmeleistung auf der Basis einer Aufheizgeschwindigkeit des Fluids; des Bestimmens eines Lambda-Werts auf der Basis der Wärmeleistung; und des Bestimmens des Füllgrads auf der Basis des Lambda-Werts. Diese Bestimmung ist insbesondere für eine Kupplung mit fester Fluidfüllung vorteilhaft. Eine Leckage kann bestimmt oder ein kalkulierter Verlust überwacht werden.

Die im oben angegeben Verfahren bestimmte Wärmeleistung kann insbesondere auf der Basis einer mittels der Kupplung übertragenen mechanischen Leistung bestimmt werden. Das Bestimmen der mechanischen Leistung umfasst bevorzugt Schritte des Bestimmens einer maximal zulässigen Temperatur der Kupplung; des Bestimmens einer Umgebungstemperatur einer Umgebung der Kupplung; und des Bestimmens der Leistung, die über die Kupplung übertragen wird, auf der Basis der Fluidtemperatur und der Umgebungstemperatur. Die maximal übertragbare Leistung kann von nichtveränderlichen Parametern oder unverlierbaren Eigenschaften der Kupplung abhängig sein, sodass sie bevorzugt nur einmalig bestimmt wird. Die übertragene Leistung kann so einfach und sicher bestimmt werden. Eine Prognose über eine maximal übertragbare Leistung oder eine maximale Zeitdauer des Übertragens einer vorbestimmten Leistung kann ermöglicht sein. Die bestimmte übertragene Leistung kann der Bestimmung noch weiterer der hier erwähnten Parameter zu Grunde gelegt werden.

In weiteren Ausführungsformen können zusätzlich noch weitere Parameter der Kupplung bestimmt werden. Bevorzugt sind dabei alle Parameter auf der Basis der bestimmten Temperatur bestimmbar. Mittels mehrerer Parameter kann der Betriebszustand der Kupplung verbessert angegeben oder vorhergesagt werden. Der Betriebszustand kann insbesondere auf eine aktuelle Belastung, eine aktuelle Belastungsfähigkeit oder einen bereits eingetretenen Verschleiß hinweisen. In Abhängigkeit des bestimmten Betriebszustands können Wartungsintervalle verbessert geplant werden. Die Intervalle können verbessert so bestimmt werden, dass zu erneuernde Komponenten früh genug ausgetauscht werden, um eine verminderte Leistungsfähigkeit oder einen Schaden zu vermeiden, gleichzeitig aber auch so lang wie möglich sein, um die Betriebsfähigkeit der Kupplung verbessert sicher zu stellen und Kosten zu sparen. Durch Einhalten der bestimmten Wartungsintervalle kann die Kupplung wieder in einen Zustand voller Leistungsfähigkeit gebracht werden, wobei die ursprüngliche Leistungsfähigkeit wieder erreicht werden kann. Das Bestimmen der Parameter kann erfolgte Wartungen der Kupplung berücksichtigen.

In einer bevorzugten Ausführungsform wird ferner eine verbleibende Lebensdauer des Fluids bestimmt. Dabei umfasst das Verfahren zusätzliche Schritte des Bestimmens von Belastungen des Fluids für die abgetasteten Temperaturen; des Bestimmens einer Summe der Belastungen; und des Bestimmens der verbleibenden Lebensdauer auf der Basis der Summe. Ein demnächst ablaufendes Wartungsintervall für das Fluid kann so auf einfache und sichere Weise bestimmt werden. Bevorzugt wird eine Verminderung der Leistungsfähigkeit des Fluids auf der Basis der thermischen Belastung des Fluids bestimmt. Die thermische Belastung kann in ausreichend guter Näherung die mechanische Belastung des Fluids widerspiegeln, sodass eine realistische Beurteilung erfolgen kann.

Darüber hinaus kann eine verbleibende Lebensdauer eines Wälzlagers zur Lagerung der Eingangsseite genüber der Ausgangsseite bestimmt werden, wobei das Verfahren zusätzliche Schritte des Bestimmens von Belastungen des Wälzlagers auf der Basis der abgetasteten Temperaturen; des Bestimmens einer Summe der Belastungen; und des Bestimmens der verbleibenden Lebensdauer auf der Basis der Summe umfasst. Der kumulierte Verschleiß des Wälzlagers kann auf der Basis der Temperatur in guter Näherung nachvollzogen werden.

Bei der Bestimmung der verbleibenden Lebensdauer des Wälzlagers kann eine Anfahrhäufigkeit berücksichtigt werden. Ein Anfahren, also ein Steigern der Differenzdrehzahl des Wälzlagers vom Stillstand bis auf eine Nenndrehzahl, verkürzt die Lebensdauer substanziell. Die Anfahrhäufigkeit kann auf die bisherige Lebensdauer des Wälzlagers bezogen werden oder es kann eine Häufung von Anfahrvorgängen innerhalb eines vorbestimmten Zeitraums berücksichtigt werden. Die Beurteilung der verbleibenden Lebensdauer kann so deutlich verbessert werden.

Es kann auch ein Schlupf zwischen der Eingangsseite und der Ausgangsseite des Wälzlagers bei der Bestimmung der verbleibenden Lebensdauer berücksichtigt werden. Dies kann durch Drehzahlerfassung von mindestens der Kupplungsausgangsseite ggf. von Eingangs- und Ausgangsseite erfolgen. Je größer der Schlupf ist, desto stärker kann das Wälzlager beansprucht werden, sodass die verbleibende Lebensdauer umso schneller sinkt, je häufiger oder länger die Kupplung mit einem hohen Schlupf betrieben wird.

Allgemein kann die Bestimmung auch bezüglich mehrerer Wälzlager erfolgen, die jeweils die Eingangsseite oder die Ausgangsseite lagern. Die Bestimmung umfasst dann bevorzugt alle Wälzlager als Lagersatz. Ist die Grenze der Lebensdauer eines der Wälzlager erreicht, so werden üblicherweise alle Wälzlager des betroffenen Lagersatzes ausgetauscht.

Die beschriebenen Parameter werden bevorzugt miteinander kombiniert bestimmt. Beispielsweise kann nach einer optionalen Initialisierung eine Endlosschleife in vorbestimmten Zeitabschnitten periodisch durchlaufen werden. Die einzelnen Parameter können unterschiedlich oft bestimmt werden, sodass nicht bei jedem Durchlauf der Schleife alle Parameter bestimmt werden. Ein Parameter kann auch ereignisgesteuert bestimmt werden. Tritt ein vorbestimmtes Ereignis ein, so kann der Parameter beim nächsten Durchlauf der Schleife bestimmt werden, ansonsten kann auf die Bestimmung verzichtet werden. Die Aufnahme von Messwerten, insbesondere das Abtasten der Temperatur des Fluids, wird bevorzugt einheitlich für die Bestimmung aller Parameter durchgeführt. Die Bestimmung eines Parameters kann auf der Bestimmung eines anderen Parameters aufbauen. Dabei kann der andere Parameter auch auf eine andere als die hier beschriebene Weise bestimmt werden, etwa durch direkte Messung oder unter Verwendung eines hier nicht explizit genannten physikalischen Modells.

Ein Computerprogrammprodukt umfasst Programmcodemittel zur Durchführung des oben beschriebenen Verfahrens, wenn das Computerprogrammprodukt auf einer Verarbeitungseinrichtung abläuft oder auf einem computerlesbaren Datenträger gespeichert ist.

Eine Steuervorrichtung zur Bestimmung eines Betriebszustands der oben beschriebenen hydrodynamischen Kupplung umfasst eine Schnittstelle zur Verbindung mit einem Temperatursensor, der zur periodischen Abtastung der Temperatur des hydraulischen Fluids eingerichtet ist; und eine Verarbeitungseinrichtung, die zur Bestimmung einer der Kupplung zugeführten Wärmeleistung auf der Basis einer Aufheizgeschwindigkeit des Fluids , eines Lambda-Werts auf der Basis der Wärmeleistung, sowie des Füllgrads auf der Basis des Lambda-Werts eingerichtet ist. Die Verarbeitungseinrichtung kann insbesondere einen programmierbaren Mikrocomputer oder Mikrocontroller umfassen und dazu eingerichtet sein, wenigstens einen Teil des oben beschriebenen Computerprogrammprodukts auszuführen. Die Verarbeitungseinrichtung kann mit der Kupplung integriert ausgeführt sein. Ferner kann die Verarbeitungseinrichtung zur Steuerung einer Antriebsmaschine, die mit der Eingangsseite verbunden ist, oder einer Arbeitsmaschine, die mit der Ausgangsseite verbunden ist, eingerichtet sein.

Die Verarbeitungseinrichtung ist in einer weiter bevorzugten Ausführungsform dazu eingerichtet, eine Warnung auszugeben, falls einer der bestimmten Parameter auf einen kritischen Betriebszustand der Kupplung hinweist. Insbesondere kann aus der Gesamtheit der Parameter, die den Betriebszustand reflektieren, eine drohende Gefahr oder ein nahendes Wartungsintervall bestimmt werden. Beispielsweise können zwei oder mehr der Parameter jeweils für sich innerhalb vorbestimmter Grenzen liegen, ihre Kombination aber auf einen kritischen Betriebszustand der Kupplung hinweisen.

Ein Kupplungssystem umfasst eine hydrodynamischen Kupplung mit einer Eingangsseite und einer Ausgangsseite, deren Drehbewegungen mittels eines hydraulischen Fluids miteinander gekoppelt sind; einen Temperatursensor zur periodischen Abtastung einer Temperatur des hydraulischen Fluids; und die oben beschriebene Steuervorrichtung. Das Kupplungssystem kann in sich abgeschlossen sein und die Übertragung von Drehmoment bei gleichzeitig verbesserter Überwachung eines Betriebszustands ermöglichen.

Die Erfindung wird nun mit Bezug auf die beigefügten Figuren genauer beschrieben, in denen:

Fig. 1     eine schematische Darstellung eines Kupplungssystems mit einer hydrodynamischen Kupplung;

Fig. 2     ein Ablaufdiagramm eines Verfahrens zum Bestimmen einer aktuellen Füllung der hydrodynamischen Kupplung mit Fluid

Fig. 3     ein Ablaufdiagramm eines Verfahrens zum Bestimmen einer aktuellen Füllung der hydrodynamischen Kupplung;

Fig. 4    ein Ablaufdiagramm eines Verfahrens zum Bestimmen einer über eine hydrodynamische Kupplung übertragene Leistung;

Fig. 5    ein Ablaufdiagramm eines Verfahrens zum Bestimmen einer verbleibenden Lebensdauer des Fluids einer hydrodynamischen Kupplung;

Fig. 6    ein Ablaufdiagramm eines Verfahrens zum Bestimmen einer verbleibenden Lebensdauer eines Wälzlagers einer hydrodynamischen Kupplung; und

Fig. 7    ein Ablaufdiagramm eines Verfahrens zum Bestimmen einer Zeit bis zum nächstmöglichen Hochlauf einer hydrodynamischen Kupplung;

darstellt.

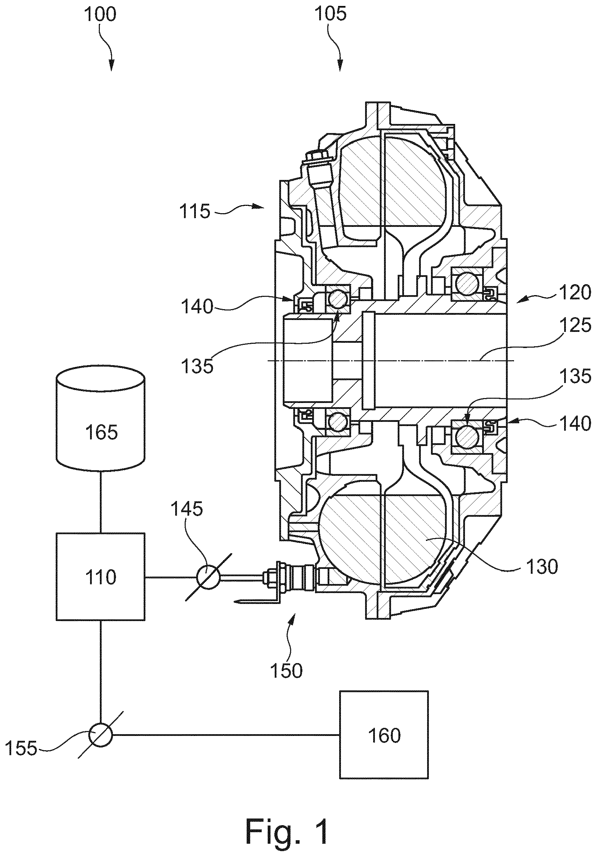

Figur 1 zeigt ein Kupplungssystem 100 mit einer hydrodynamischen Kupplung 105 und einer Steuervorrichtung 110. Die Kupplung 105 umfasst eine Eingangsseite 115 und eine Ausgangsseite 120, die um eine gemeinsame Drehachse 125 drehbar gelagert sind. Ein hydraulisches Fluid 130 stellt eine Drehmomentkopplung zwischen der Eingangsseite 115 und der Ausgangsseite 120 her. Die Eingangsseite 115 ist mittels wenigstens eines Wälzlagers 135 gegenüber der Ausgangsseite 120 gelagert. In Abhängigkeit eines Kupplungstyps, der insbesondere Anschlüsse zur Ein- und Ausleitung von Drehmoment beschreibt, können Belastungen auf die Wälzlager 135 unterschiedlich sein, auch wenn ihre Anordnung unveränderlich ist. Zwischen der Eingangsseite 115 und der Ausgangsseite 120 können eine oder mehrere Dichtungen 140 vorgesehen sein, die unterschiedliche Materialien umfassen können.

Die Kupplung 105 kann in einer von mehreren vorbestimmten Ausführungsformen vorliegen. Beispielsweise kann das Kupplungssystem 100 mit Kupplungen 105 unterschiedlicher, vorbestimmter Durchmesser verwendet werden, die in einem Bereich von ca. 154 bis 1150 mm liegen können. Jeder dieser Kupplungen 105 kann für die Übertragung einer vorbestimmten maximalen Leistung in einem vorbestimmten Drehzahlbereich eingerichtet sein. Die Leistung kann beispielsweise in einem Bereich von ca. 100 W bis ca. 5 MW und die Drehzahl in einem Bereich zwischen ca. 300 und 4000 min$^{-1}$. Die Kupplungen 105 können auch in unterschiedlichen Ausführungsformen vorliegen, beispielsweise mit oder ohne Gehäuse, mit einfacher oder doppelter Pumpenrad-Turbinenrad-Anordnung oder mit unterschiedlichen Arten einer Ausgleichskammer zur temporären Aufnahme von Fluid 130. Jede Kupplung 105 kann dabei spezifische Eigenschaften aufweisen, beispielsweise ein thermisches Verhalten in Antwort auf eine vorbestimmte Belastung.

Bestimmte der bestimmten Parameter oder ihrer Zwischenwerte können in einer Ausführungsform abgespeichert und/oder graphisch aufbereitet werden. So kann beispielsweise ein Trend eines Parameters zu einer beliebigen Zeit visualisiert werden. In einer weiteren Ausführungsform können einer oder mehrere Parameter mit Schwellenwerten verglichen werden und bei Über bzw. Unterschreiten des Schwellenwerts kann ein Signal ausgegeben werden. Ein Signal kann auch aufgrund einer logischen Verkettung mehrerer Bedingungen ausgegeben werden. Dabei kann durch das Signal nicht nur auf einen bestimmten Zustand, beispielsweise eine drohende Übertemperatur der Kupplung 105, sondern auch auf eine vorgeschlagene Lösungen, etwa das Abstellen des Antriebsmotors, der mit der Eingangsseite 115 verbunden ist, bzw. das reduzieren der Belastung durch die Arbeitsmaschine, die mit der Ausgangsseite verbunden ist, hingewiesen werden.

Es ist bevorzugt, dass eine vorbestimmte Menge Fluid 130 in die Kupplung 105 eingefüllt ist, wobei das Fluid 30 im Betrieb zwar umgewälzt wird, jedoch üblicherweise nicht die Kupplung 105 verlässt, beispielsweise um durch einen Wärmetauscher zu strömen. Man spricht hierbei auch von einer konstanten Füllung. Das Fluid 130 ist gewöhnlich gebildet durch ein mineralisches oder synthetisches Öl, kann aber auch auf Wasserbasis bereitgestellt sein, beispielsweise um die Kupplung 105 in einer explosionsgefährdeten Umgebung einzusetzen.

Die Steuervorrichtung 110 umfasst eine erste Schnittstelle 145 zur Verbindung mit einem Temperatursensor 150, der zur Abtastung der Temperatur des hydraulischen Fluids 130 in der Kupplung 105 eingerichtet ist. Der Temperatursensor 150 ist bevorzugt berührungslos ausgelegt ("BTM"), um die Temperatur des um die Drehachse 125 strömenden Fluids 130 außerhalb der sich im Betrieb um die Drehachse 125 drehenden Kupplung 105 ortsfest zur Verfügung zu stellen. Es können auch noch einer oder mehrere weitere Sensoren vorgesehen sein, um einen Messwert an der Kupplung 105 abzutasten. Der Messwert kann jedoch auch durch eine andere Einrichtung bereitgestellt werden, beispielsweise eine Steuer- oder Messeinrichtung. In diesem Fall kann der Messwert auch über die Schnittstellen 145 oder eine dedizierte Schnittstelle von der Steuervorrichtung 110 übernommen werden.

Die Steuervorrichtung 110 ist dazu eingerichtet, einen Betriebszustand der Kupplung 105 zu bestimmen, wobei der Betriebszustand mehrere Parameter umfasst, die jeweils auf der Basis der Temperatur des hydraulischen Fluids 130 bestimmt werden können. Es ist bevorzugt, dass die Steuervorrichtung 110 eine zweite Schnittstelle 155 umfasst, um den bestimmten Betriebszustand oder andere Informationen bereitzustellen, insbesondere an eine Endeinrichtung 160. Die Steuervorrichtung 110 kann eine Speichervorrichtung 165 umfassen oder mit ihr verbunden sein, wobei die Speichervorrichtung 165 zur Aufnahme von abgetasteten Messwerten, bestimmten Parametern oder sonstigen Bestimmungsergebnissen eingerichtet sein kann. Weiter können Konstanten, Kennlinien oder sonstige Informationen, die spezifisch für die Bestimmung eines Parameters für eine vorbestimmte Kupplung 105 sind, beispielsweise ein thermisches Verhalten der Kupplung 105 in Antwort auf eine vorbestimmte Belastung, in der Speichervorrichtung 165 abgelegt sein.

Die Endeinrichtung 160 kann zur Interaktion mit einer Person eingerichtet sein, beispielsweise indem einer oder mehrere Parameter des Betriebszustands angezeigt werden können. Die Endeinrichtung 160 kann auch zur Steuerung der Steuervorrichtung 110 verwendbar sein, etwa um vorbestimmte gespeicherte Parameter abzurufen oder die Bestimmung der Parameter zu beeinflussen. In einer weiteren Ausführungsform kann die Endeinrichtung 160 auch eine Steuervorrichtung umfassen, die zur Steuerung der Kupplung 105, einer die Kupplung 105 antreibenden Komponente oder einer durch die Kupplung 105 angetriebenen Komponente eingerichtet sein. Insbesondere kann die Endeinrichtung 160 dazu eingerichtet sein, in Abhängigkeit vom Betriebszustand eine Übertragung von Drehmoment über die Kupplung 105 einzuschränken oder einzustellen. In einer weiteren Ausführungsform kann die Steuerfunktion auch von der Steuervorrichtung 110 durchgeführt werden.

Im Folgenden werden beispielhafte Bestimmungen von Parametern vorgestellt, von denen mehrere vom Betriebszustand der Kupplung 105 umfasst sein können. Es ist zu beachten, dass die einzelnen Verfahren zum Bestimmen der Parameter bevorzugt parallel bzw. nebenläufig durchgeführt werden. Ein Initialisierungsschritt, der für einige der Verfahren erforderlich sein kann, kann dabei verfahrensübergreifend in einem Schritt integriert werden. Im Initialisierungsschritt können mehrere Werte oder Daten beispielsweise mittels einer manuellen Eingabe zur Verfügung gestellt werden.

Die Verfahren umfassen jeweils eine Endlosschleife, um ihre Bestimmungen zyklisch durchzuführen. Die Endlosschleifen sind bevorzugt miteinander integriert, wobei die Häufigkeit der Durchführung der Schritte der einzelnen Verfahren innerhalb der Schleife nicht unbedingt gleich sein muss. Eine Schleife wird bevorzugt alle ca. 5 s bis alle 10 s durchlaufen. Der Schritt des Abtastens der Temperatur der Kupplung 105 ist allen Verfahren gemein. Bestimmte Parameter der beschriebenen Verfahren können aufeinander aufbauen, beispielsweise indem eine Alterung des Fluids 130 auf der Basis einer über die Kupplung 105 übertragenen Leistung bestimmt wird. Die Reihenfolge der Schritte in der Endlosschleife ist daher entsprechend zu wählen. Unter bestimmten Umständen, beispielsweise wenn eine Komponente der Kupplung 105 gewartet oder ersetzt wird, werden Parameter eines oder mehrerer Verfahren auf Initialwerte zurückgesetzt.

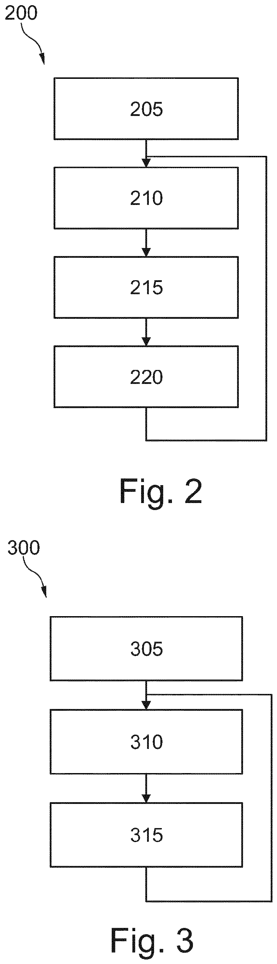

Figur 2 zeigt ein Ablaufdiagramm eines Verfahrens 200 zum Bestimmen einer aktuellen Füllung der hydrodynamischen Kupplung 105 mit Fluid 130. In einem Initialisierungsschritt 205 wird bevorzugt ein Typ der Kupplung 105 bestimmt. Anschließend wird eine Schleife von Schritten 210 bis 220 bevorzugt periodisch durchlaufen, beispielsweise alle ca. 5 oder ca. 10 Sekunden.

Im Schritt 205 wird die Temperatur des Fluids 130 der Kupplung 105 bestimmt. In einem Schritt 210 erfolgt eine Bestimmung der über die Kupplung 105 übertragenen Leistung P:

$$P = A \cdot \frac{\Delta \vartheta}{\Delta t} \cdot wirksame\,Wärmekapazität\,der\,Kupplung$$

Dabei ist die wirksame Wärmekapazität der Kupplung wiederum eine Funktion der Aufheizgeschwindigkeit. Die wirksame Wärmekapazität der Kupplung umfasst zum einen einen Bestandteil, der auf die Wärmekapazität der Kupplung zurück geht und zum anderen einen Bestandteil, der auf die Wärmekapazität des Fluids in der Kupplung zurückgeht.

Dabei gilt: $\frac{\Delta \vartheta}{\Delta t}$: Maximalwert der gemessenen/berechneten Aufheizgeschwindigkeit während der ersten 5s nach Motorstart (Bedingung für Motorstart: $\frac{\Delta \vartheta}{\Delta t} > 0{,}5 K/s$ und die Drehzahl der Kupplung n2 ist bzw. war null im Zeitraum 10s vorher). In die wirksame Wärmekapazität der Kupplung fließt geht die Wärmekapazität der Kupplung und die Wärmekapazität des Fluids unter Berücksichtigung des jeweiligen Füllgrades der Kupplung ein.

In einem anschließenden Schritt 215 wird auf der Basis der übertragenen Leistung der Lambda-Wert $\lambda_A$ bestimmt:

$$\lambda_A = \frac{P}{\rho_{Fluid} \cdot D_P^5 \cdot \omega_1^2 \cdot z}$$

mit:

P: zugeführte Wärmeleistung [kW]

$\rho_{Fluid}$: Dichte Betriebsmedium (Öl: 840kg/m$^3$; Wasser: 980 kg/m$^3$)

$D_P$: Profildurchmesser [m]

$\omega 1$: $n_N * \pi$; wobei der $n_N$ über n2 und eine Tabelle oder Datenbank bestimmt wird

z: Kreislaufanzahl. Sind ein Pumpenrad und ein Turbinenrad vorgesehen, so ist z=1, sind jeweils zwei vorgesehen, die paarweise miteinander gekoppelt sind, beträgt z=2.

Der Füllgrad ist eine Funktion von $\lambda_A$, Kupplungstyp, Kupplungsdurchmesser und hydrodynamischem Profil.

Befindet sich die Kupplung 105 im stationären Betrieb, so kann auch eine andere Herangehensweise zum Bestimmen einer aktuellen Füllung einer hydrodynamischen Kupplung 105 mit Fluid 130 gewählt werden.

Figur 3 zeigt ein Ablaufdiagramm eines korrespondierenden Verfahrens 300. In einem Initialisierungsschritt 305 wird die Nenndrehzahl $n_N$ bestimmt. Dies kann auf der Basis der Beharrungsdrehzahl $n_2$ mittels einer Tabelle durchgeführt werden, sodass beispielsweise 1458 $min^{-1}$ auf 1490 $min^{-1}$ abgebildet werden. Anschließend wird eine Schleife von Schritten 310 bis 315 bevorzugt periodisch durchlaufen, beispielsweise alle ca. 5 oder ca. 10 Sekunden. Im Schritt 310 werden die Temperatur $\vartheta_{VTK}$ des Fluids 130, die Temperatur $\vartheta_{Umg}$ und die Drehzahl $n_2$ der Kupplung 105 bestimmt.

Im Schritt 315 wird ein Füllverlust der Kupplung 105 bestimmt. Bei der Bestimmung wird davon ausgegangen, dass die über die Kupplung 105 übertragene Leistung $P \sim \Delta\vartheta^c$ ist und ferner $P \sim m \cdot s$ gilt. Dabei ist c eine Zahl. Dabei ist m die Steigung der Nennschlupfgerade.

$$\text{Damit ist } \frac{\Delta\vartheta^c}{s} = \frac{\Delta\vartheta^c}{\left(1 - \dfrac{n_2}{n_N}\right)} = k \cdot m = const.$$

Sollte die Kupplung 105 undicht sein, so liegt der oben beschriebene Quotient nicht mehr auf dieser Gerade. Dieses Kriterium kann zur Bestimmung einer Undichtigkeit ausgenutzt werden. Der Faktor $k \cdot m$ wird bevorzugt bestimmt, wenn die Temperatur $\vartheta_{VTK}$ des Fluids 130 bereits eingeschwungen ist. Dies ist beispielsweise der Fall, wenn die Bedingung $\dfrac{\Delta\vartheta}{\Delta t} < 0{,}01 \dfrac{K}{s}$ für mindestens ca. 10 min erfüllt ist. Dadurch kann ausgeschlossen werden, dass noch zu hohe Temperaturen vom Hochlaufen der Kupplung 105 erfasst werden. Zyklische Lastschwankungen mit konstanter Temperatur $\vartheta_{VTK}$ der Kupplung 105 können so aber erfasst werden. Es wird davon ausgegangen, dass sich die Lastdrehzahl bei einem Lastwechsel sinusförmig ändert.

Ist obige Bedingung erfüllt, so wird in einer bevorzugten Ausführungsform alle ca. 6 h ein Wert in einen FIFO-Speicher geladen, der beispielsweise ca. 100 Werte beinhaltet. Für $n_2$ muss beim Abspeichern der Mittelwert der letzten 10 min benutzt werden. Aus diesem FIFO-Speicher kann dann ein Mittelwert für k*m gebildet werden.

Im stationären, also Betrieb, also im eingeschwungenen Zustand kann dann der Füllungsverlust dann wie folgt festgestellt werden:

$$\frac{\Delta\vartheta^c}{\left(1 - \dfrac{\o n_2}{n_N}\right)} < 0{,}75 \cdot \left(\o k \cdot m\right).$$

Dabei gilt:

m: Steigung der Nennschlupfgerade

$\o n_2$: Mittelwert der Ausgangsdrehzahl über die letzten ca. 10 Minuten

$(\o k \cdot m)$: Durchschnitt der letzten ca. 100 Werte von $(k \cdot m)$

Der Faktor 0,75 rührt daher, dass der Unterschied der Steigung bei der konstanten Füllung üblicherweise nicht größer als 25% ist. In anderen Ausführungsformen kann ein modifizierter Faktor verwendet werden, um eine gegebene Kupplung 105 verbessert darzustellen.

Wurde ein verringerter Füllgrad bestimmt, so kann ein entsprechendes Signal ausgegeben werden. Das Signal wird bevorzugt erst ausgegeben, wenn der Füllgrad einen vorbestimmten Schwellenwert unterschreitet.

Im oben beschriebenen Verfahren 200 wird im Schritt 210 die in die Kupplung 105 eingebrachte thermische Leistung auf der Basis der über die Kupplung 100 übertragenen mechanischen Leistung bestimmt. Die mechanische Leistung kann gemessen oder mittels eines Verfahrens bestimmt werden.

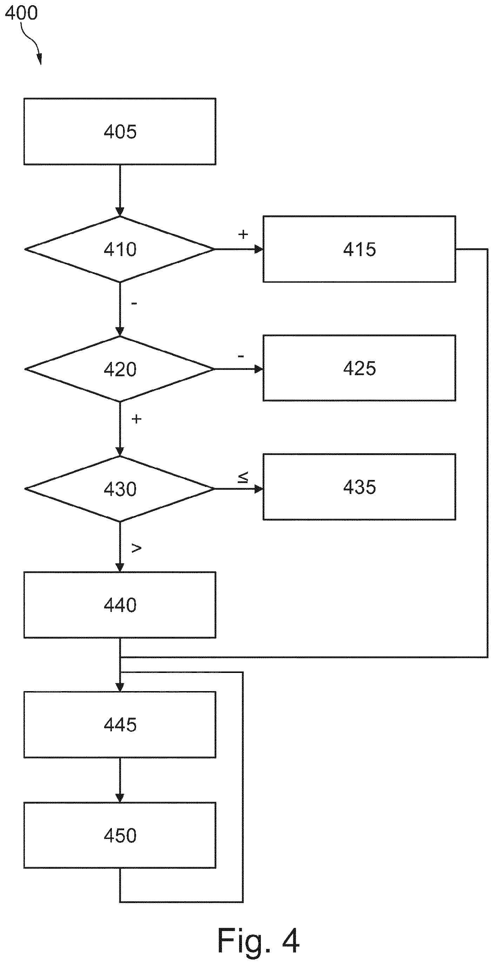

Figur 4 zeigt ein Ablaufdiagramm eines Verfahrens 400 zum Bestimmen einer über eine hydrodynamische Kupplung 105 übertragenen Leistung. Das Verfahren 400 kann insbesondere integriert mit dem Verfahren 200 von Figur 2 durchgeführt werden. In einem Initialisierungsschritt 405 werden bevorzugt wenigstens eines von einer maximalen Betriebstemperatur $\vartheta_{max}$ der Kupplung 105, einer Größe der Kupplung 105, vorzugsweise anhand ihres Durchmessers oder eines bekannten Kupplungstyps, einem Betriebsmedium und einer Angabe, ob eine Dichtung 140 mit dem Material Viton verwendet wird, bereitgestellt.

Als Betriebsmedien kommen üblicherweise Öl und Wasser in Betracht. In einem Schritt 410 wird das Betriebsmedium analysiert. Handelt es sich um Wasser, so wird $\vartheta_{B,max}$ in einem Schritt 415 auf einen vorbestimmten °C-Wert gesetzt und das Verfahren 400 fährt mit einem Schritt 445 fort. Andernfalls wird in einem Schritt 420 bestimmt, ob als Material der Dichtungen 140 Viton verwendet wird. Ist dies nicht der Fall, so wird von einem Dichtungsmaterial wie NBR ausgegangen und $\vartheta_{B,max}$ wird in einem Schritt 425 auf einen vorbestimmten °C-Wert gesetzt. Anschließend fährt das Verfahren 400 mit dem Schritt 445 fort. Wird hingegen Viton verwendet, so kann $\vartheta_{B,max}$ anhand der Kupplungsgröße bestimmt werden. In einem Schritt 430 wird bestimmt, ob der Kupplungsdurchmesser einen vorbestimmten Kupplungsdurchmesser unterschreitet. In diesem Fall wird in einem Schritt 435 $\vartheta_{B,max}$ bevorzugt auf vorbestimmten °C-Wert gesetzt. Für Kupplungen 105 mit einem größeren Durchmesser kann $\vartheta_{B,max}$ auf einen anderen vorbestimmten °C-Wert gesetzt werden. In beiden Fällen fährt das Verfahren 400 mit dem Schritt 445 fort.

Im Schritt 445 werden die Temperatur $\vartheta_{VTK}$ des Fluids 130 der Kupplung 105 und die Temperatur $\vartheta_{Umg}$ der Umgebung der Kupplung 105 abgetastet. In einem nachfolgenden Schritt 450 wird dann die Kupplung 105 übertragene relative Leistung wie folgt bestimmt:

$$P_{Last,relativ} = \left( \frac{\vartheta_{VTK} - \vartheta_{Umg}}{\vartheta_{B,max} - \vartheta_{Umg}} \right)^{c}.$$

Beträgt beispielsweise die Kupplungstemperatur $\vartheta_{VTK}$ =78°C, die Umgebungstemperatur $\vartheta_{Umg}$ =31°C und $\vartheta_{B,max}$ =95°C, so ist die relative Last:

$$P_{Last,relativ} = \left( \frac{78 - 31}{95 - 31} \right)^{c} = 0{,}734^{c}$$

In einer weiteren Ausführungsform kann an Stelle der relativen Leistung auch die absolute Leistung an der Kupplung 105 wie folgt bestimmt werden:

$$P \text{ [kW]} = \lambda * \rho_{Fluid} * \omega_1^3 * D_P^5 * z$$

mit:

$D_P$: Profildurchmesser
$\omega_1$: $=n_N$
z: Kreislaufanzahl. Sind ein Pumpenrad und ein Turbinenrad vorgesehen, so ist z=1, sind jeweils zwei vorgesehen, beträgt z=2.
$\lambda$: $=m*s$
m: Steigung der Nennschlupfgerade

Die Steigung der Nennschlupfgerade m kann wegen unterschiedlicher möglicher Wärmeabfuhr üblicherweise nur ungenau bestimmt werden, sodass die Leistung nicht sehr genau bestimmt werden kann. In einer alternativen Ausführungsform kann eine hinterlegte Nennschlupfgerade verwendet werden, die auf der Basis einer Eingabe einer exakten Füllung der Kupplung 105 mit Fluid 130 aus einer Schar hinterlegter Nennschlupfgeraden ausgewählt werden kann. Allerdings weist die Nennschlupfgerade üblicherweise einen abknickenden Verlauf auf, sodass durch die Näherung einer konstanten Steigung ein wesentlicher Fehler in die Bestimmung eingetragen werden kann. Darüber hinaus können noch weitere Fehler (z. B. die Viskosität des Fluids 130) die Bestimmung beeinträchtigen.

Zur weiter verbesserten Steuerung der Kupplung 105 können noch weitere Parameter bestimmt werden. Insbesondere wird vorgeschlagen, Parameter zu bestimmen, die auf eine verbleibende Lebensdauer von Elementen wie des Fluids 130 oder eines Lagers 135 hinweisen.

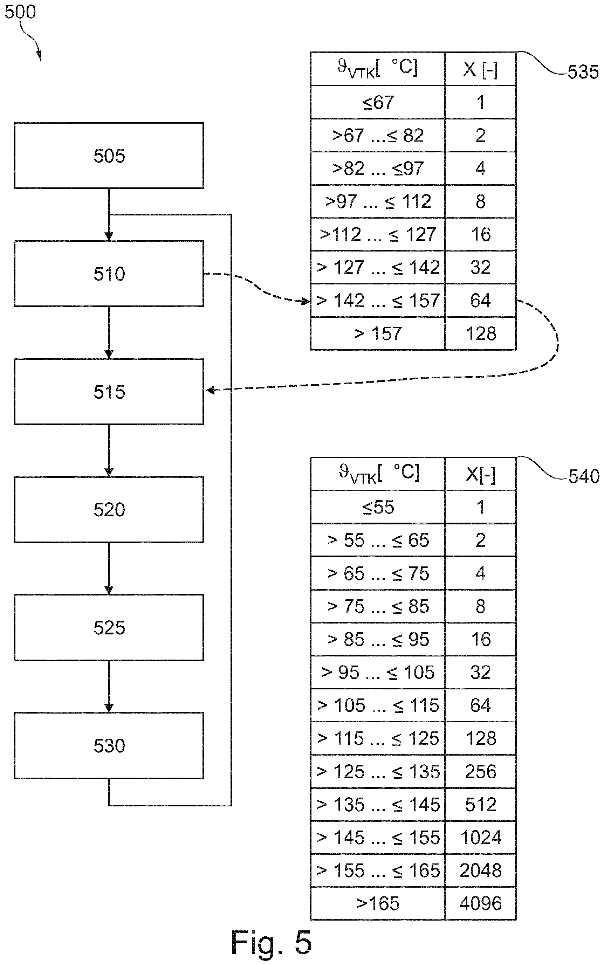

Figur 5 zeigt ein Ablaufdiagramm eines Verfahrens 500 zum Bestimmen einer verbleibenden Lebensdauer des Fluids 130. In einem Initialisierungsschritt 505 wird die Art des Fluids 130 bestimmt. Üblicherweise gibt dazu eine Bedienperson einen entsprechenden Wert in die Endeinrichtung 160 ein. Interne Zähler und Inkrementatoren des Verfahrens 500, die anschließend noch genauer beschrieben werden, werden bevorzugt im Schritt 105 zurückgesetzt. Der Schritt 105 muss üblicherweise jeweils nach dem Einfüllen von neuem Fluid 130 in die Kupplung 105 durchgeführt werden.

Anschließend wird eine Schleife von Schritten 510 bis 530 bevorzugt periodisch durchlaufen, beispielsweise alle 10 Sekunden. Im Schritt 510 wird die Temperatur $\vartheta_{VTK}$ des Fluids 130 der Kupplung 105 abgetastet. Anschließend wird im Schritt 515 ein aktueller Belastungswert bestimmt. Dazu wird bevorzugt zur bestimmten Temperatur in einer Tabelle 535 oder 540 ein Wert nachgeschlagen, der mit der Länge des Intervalls zwischen zwei Messungen multipliziert wird. In einer bevorzugten Ausführungsform wird die beispielhafte Tabelle 535 verwendet, falls das Fluid 130 laut dem Initialisierungsschritt 505 ein Synthetiköl umfasst, und die beispielhafte Tabelle 540, falls es Mineralöl umfasst. Handelt es sich beim Fluid 130 um Wasser, so kann die Bestimmung der Lebensdauer des Fluids 130 ausgesetzt werden.

Beispielsweise führt bei einem Intervall $\Delta t$ von 10 Sekunden eine bestimmte Temperatur $\vartheta_{VTK}$ des synthetischen Fluids 130 von 148 °C zu einem Tabellenwert von 64, sodass der aktuelle Belastungswert 10 s * 64 = 640 s beträgt.

In einem Schritt 520 werden aktuelle Belastungswerte, die in n Schleifendurchläufen seit dem letzten Initialisierungsschritt 505 bestimmt wurden, aufsummiert. Der Nutzungsgrad k des Fluids 130 bestimmt sich dann im Schritt 525 beispielsweise zu $$k = \frac{\sum_{i=0}^{n} X_i \cdot \Delta t}{40000 h}.$$ Die Restlaufzeit $t_{rest,fluid}$ kann dann zu $t_{rest,Fluid} = n \cdot \Delta t \cdot (1/k - 1)$ bestimmt werden.

Beträgt k<1, so ist die maximale Lebensdauer des Fluids 130 noch nicht erreicht. Andernfalls kann im Schritt 530 ein Hinweis auf die abgelaufene Lebensdauer des Fluids 130 ausgegeben werden.

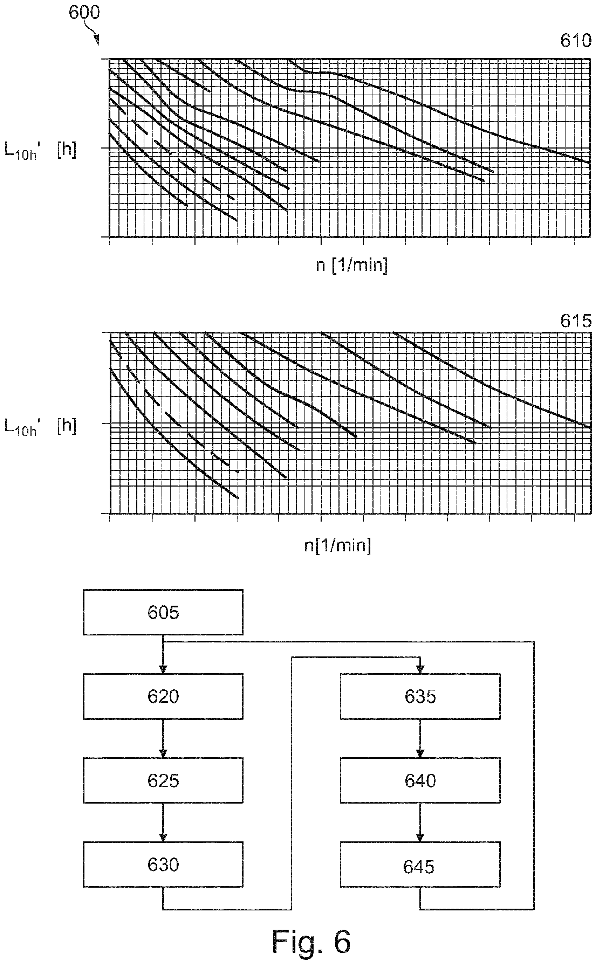

Figur 6 zeigt ein Ablaufdiagramm 600 eines Verfahrens zum Bestimmen einer verbleibenden Lebensdauer bzw. eines Nutzungsgrads eines Wälzlagers 135. In einem Initialisierungsschritt 605 werden bevorzugt wenigstens eines von der Größe der Kupplung 105, vorzugsweise anhand ihres Durchmessers oder eines bekannten Kupplungstyps, einer Nenndrehzahl $n_N$, einem Verbindungskupplungstyp, einer Art eines Wälzlagers 135 und einer Erlebniswahrscheinlichkeit festgelegt. Der Verbindungskupplungstyp kann beschreiben, wie Verbindungen auf der Eingangsseite 115 und der Ausgangsseite 120 ausgeführt sind. Beispielsweise kann die Kupplung 105 so ausgeführt sein, dass ihr Gewicht auf die Eingangsseite 115 und die Ausgangsseite 120 verteilt wird, wenn die Drehachse 125 horizontal liegt (Ausführung "GPK"). Weitere Ausführungsformen sind auch möglich. Die Art des Wälzlagers 135 kann beispielsweise angeben, ob es sich um ein ein- oder zweiseitig abgedichtetes Lager handelt, das etwa als Dauerläufer ausgelegt ist, oder etwa ein mit erhöhter Lagerluft ausgeführtes Lager umfasst.

Eine nominelle Erlebniswahrscheinlichkeit $L'_{10h}$ ist abhängig vom Kupplungstyp und dem Kupplungsdurchmesser. In hinterlegten Tabellen, wie beispielhaft in Fig. 6 in 610 und 615 skizziert, sind Erlebniswahrscheinlichkeiten hinterlegt, die in Abhängigkeit eines Kupplungsdurchmessers aus einer Kennlinie eines ersten Diagramms 610 oder eines zweiten Diagramms 615 ausgelesen werden können.

Das erste Diagramm 610 betrifft Kupplungen 105 des Typs EPK, ENK bzw. EEK. Diese Kupplungen 105 umfassen klassische Steckkupplungen mit Elastomer-Elementen, die eine Verlagerung elastisch in Elastomeren aufnehmen. Die Nabe der VTK wird z. B. auf die Getriebewelle aufgezogen und die Einbau- und Betriebsverlagerungen werden elastisch "überbrückt" / aufgenommen. Abhängig von der Elastomer-Kennlinie entstehen Rückstellkräfte zwischen den Kupplungsteilen, die sich auf der Lagerung der VTK abstützen.

Das zweite Diagramm 615 betrifft Kupplungen 105 des Typs GPK (Ganzmetall-Paket-Kupplung). Diese Kupplung umfasst eine VTK-Kupplung mit einer kardanischen Aufhängung zwischen zwei Gelenken. Diese Gelenke umfassen wechselseitig verschraubte Federstahlringscheibenpakete als elastisch verformbare Elemente. Eine GPK-Kupplung verlagert sich nur winklig und axial in jedem der beiden Kupplungselemente 115, 130 und ist in radialer Richtung und in Drehrichtung sehr steif. Reaktionskräfte aus der Verlagerung der GPK-Elemente sind sehr gering.

In beiden Diagrammen 610, 615 wird von einer Kupplung 105 mit konstanter Füllung an Fluid 130 ausgegangen (Kennbuchstabe T). Die in den Diagrammen 610, 615 dargestellten Kurven sind jeweils bestimmten Durchmessern von Kupplungen 105 zugeordnet und Teil der Typenbezeichnung sein kann.

Anschließend wird eine Schleife von Schritten 620 bis 645 bevorzugt periodisch durchlaufen, beispielsweise alle 5 Sekunden. Im Schritt 620 wird die Temperatur $\vartheta_{VTK}$ des Fluids 130 bestimmt. Im nachfolgenden Schritt 625 wird auf der Basis der Temperatur ein Temperaturfaktor $f_{Temp}$ bestimmt:

$$f_{Temp} = \frac{1}{j \cdot \sqrt{1/\vartheta_{VTK}}}.$$

Es kann eine Anfahrhäufigkeit berücksichtigt werden, indem im Schritt 630 ein Zeitverhältnis der Anfahrhäufigkeit beispielsweise wie folgt bestimmt wird: $w = \dfrac{Betriebszeit\, Anfahren}{Betriebszeit\, Gesamt}$ , wobei die Betriebszeit "Anfahren" gezählt wird, falls die Drehzahl $n_2$ der Ausgangsseite 120 unter einem vorbestimmten Schwellenwert, beispielsweise 0,87 * $n_N$, liegt, andernfalls wird die Betriebszeit Gesamt gezählt. Anschließend kann im Schritt 635 der Anfahrhäufigkeitsfaktor $f_{Anfahr}$ bestimmt werden. Dieser kann auf der Basis von Berechnungswerten bestimmt werden, die in Form einer zeitabhängigen Kurve angegeben sind.

Die Kurve kann bestimmt werden, indem die Lagerlebensdauer für eine Anfahrzeit beschrieben wird, Lagerlebensdauern für längere Anfahrzeiten ermittelt werden, die Lebensdauern zur Bildung von Faktoren zur Beschreibung der Reduzierung verwendet werden und die Faktoren durch ein Polynom beispielsweise sechsten Grades zeitabhängig beschrieben werden.

Es ist weiterhin bevorzugt, dass im Schritt 640 ein Schlupf der Kupplung 105 berücksichtigt wird. Dazu wird bevorzugt ein Schlupffaktor $f_{Schlupf}$ bestimmt:

$$f_{Schlupf} = \begin{cases} s < 2\% \rightarrow f_{Schlupf} = 1/l \\ 2\% \le s \le 4\% \rightarrow f_{Schlupf} = \dfrac{1}{fs(s)} \\ s > 4\% \rightarrow f_{Schlupf} = 1/b \end{cases} \text{ mit } s = \left(1 - \dfrac{n_2}{n_N}\right) \cdot 100.$$

Dabei handelt es sich bei l und b um vorbestimmte Zahlenwerte und bei $f_s$ um eine Funktion in Abhängigkeit von s.

Im Schritt 645 kann dann die Belastung des Wälzlagers 135 wie folgt bestimmt werden:

$$t_{aktuell} = 5s \cdot f_{Temp} \cdot f_{Anfahr} \cdot f_{Schlupf} \cdot a_1 \cdot a_{23}$$

mit:

a1: Faktor für die Erlebniswahrscheinlichkeit
a23: Faktor für die Viskositätsabhängigkeit

Im hier beschriebenen Beispiel wird von einer periodischen Bestimmung alle 5 s ausgegangen; in anderen Ausführungsformen kann auch eine häufigere oder weniger häufige Bestimmung erfolgen. Die oben genannten Faktoren sind dann entsprechend anzupassen. Sollte einer der oben beschriebenen Faktoren (bzgl. Temperatur, Anfahrhäufigkeit oder Schlupf) nicht erhoben werden, so kann er mit einem abgeschätzten Wert zu Grunde gelegt werden.

Die seit dem letzten Lagerwechsel kumulativ aufgetretene Belastung wird fortlaufend über alle aktuellen Belastungen aufsummiert:

$$t_{Summe} = \sum_0^n t_{aktuell}.$$

Der Nutzungsgrad k der Lager berechnet sich zu: $k = \dfrac{t_{Summe}}{L`_{10h}}$ Erreicht oder übersteigt k den Wert 1, so kann eine Meldung ausgegeben werden, dass ein Wechsel des oder der Wälzlager 135 erforderlich ist. Andernfalls kann eine Restlaufzeit ausgegeben werden.

Die Restlaufzeit des Lagers $t_{Rest,Lager}$ berechnet sich zu: $t_{Rest\, Lager} = t_{Laufzeit\, bisher} \cdot (1/k - 1)$

Dabei ist die bisherige Laufzeit einfach die aufsummierte Zeit (ohne Faktoren) seit dem letzten Lagerwechsel, während derer die Bedingung n2 > 0 erfüllt war. Wird das Wälzlager 135 der Kupplung 105 gewechselt, so wird insbesondere $t_{Summe}$ auf null gesetzt. Weitere Variablen können ebenfalls zurückgesetzt werden.

In noch einer weiteren Ausführungsform wird eine Zeit bis zum nächstmöglichen Hochlauf der hydrodynamischen Kupplung 105 bestimmt.

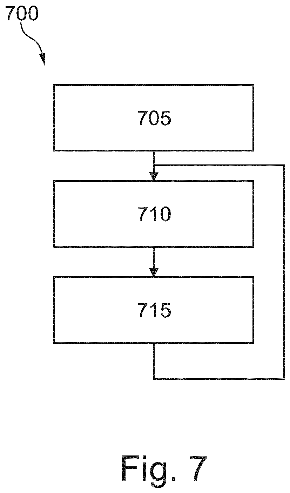

Figur 7 zeigt ein Ablaufdiagramm eines korrespondierenden Verfahrens 700. In einem Initialisierungsschritt 705 werden bevorzugt wenigstens eines von einer Nenndrehzahl $n_N$, einer Größe, einem Typ, einem Füllung mit Fluid 130 und einem Betriebsmedium der Kupplung 105 bestimmt. Als Größe kann ein Durchmesser verwendet werden. Als Füllung kann ein tatsächliches oder ein projektiertes Volumen von Fluid 130 angegeben werden.

Anschließend werden Schritten 710 und 715 durchlaufen, entweder zeitgesteuert, beispielsweise alle ca. 5 oder ca. 10 Sekunden, oder ereignisgesteuert. Im Schritt 710 werden bevorzugt die Temperatur $\vartheta_{VTK}$ des Fluids 130, die Temperatur $\vartheta_{Umg}$ der Umgebung der Kupplung 105 und die Abtriebsdrehzahl $n_2$ bestimmt. Eine erforderliche Kühlzeit, in der die Kupplung 105 stillstehen sollte, bevor sie erneut anläuft, kann in einem Schritt 715 bestimmt werden. Die erforderliche Mindestabkühlzeit hängt zum einen von der Temperatur der Kupplung zum Zeitpunkt des Abstellens und der wirksamen Wärmekapazität der Kupplung sowie der Umgebungstemperatur. Darüber hinaus kann vorgesehen sein auch eine Beladung und damit die Belastung der Kupplung beim Wiederanfahren zu berücksichtigen.

$$\Delta\vartheta_{Anfahr,\min} = \vartheta_{VTK} - \vartheta VTK, Start$$

mit:

$\vartheta_{VTK,max,beim,Hochlauf}$:     max. Wert von $\vartheta_{VTK}$ für: $0 < n_2 < ((\Delta n_1 2 \cdot s^{-1})/n_1 N) < 0,001$
$\vartheta_{VTK,Start}$:     $\vartheta VTK$ wenn $n_2$ nach min. ca. 30 s erstmalig wieder >0 wird

Ferner kann für $\Delta\vartheta_{Anfahr,min}$ nach einem Beladungszustand unterschieden werden. Als Kriterium kann herangezogen werden, dass $n_2$ vor dem Abschalten $((\Delta n_1 2 \cdot s^{-1})/n_1 N) < -0,001$ und der Mittelwert $n_2$ ca. 5 s bis ca. 10 s vor dem Erreichen dieser Bedingung aus folgender Tabelle entnommen ist:

| $\Delta\vartheta_{Anfahr\ min}$ | | | | | |
|---|---|---|---|---|---|
| $1{*}n_N > n_2 \geq 0,995{*}n_N$ | $0,995{*}n_N > n_2 \geq 0,99{*}n_N$ | $0,99{*}n_N > n_2 \geq 0,985{*}n_N$ | ... | ... | $0,9{*}n_N$ |

FIFO-Speicher mit
z. B. 20 Werten

Die in der Tabelle gebildeten Intervalle für $n_2$ sind rein exemplarisch. Es wird nur der Bereich bis zu 10 Prozent Schlupf betrachtet, da es um die Beurteilung der Beladung vor der Abschaltung geht. Ein längerfristiger Betrieb oberhalb von 10 Prozent Schlupf ist üblicherweise nicht möglich, da hierbei eine thermische Überlastung droht und die Kupplung auf Grund Ihrer Kennlinie abtriebsseitig kurzfristig zum Stillstand kommen kann.

Bezugszeichen

| | |
|---|---|
| 100 | Kupplungssystem |
| 105 | hydrodynamische Kupplung |
| 110 | Steuervorrichtung |
| 115 | Eingangsseite |
| 120 | Ausgangsseite |
| 125 | Drehachse |
| 130 | Fluid |
| 135 | Wälzlager |
| 140 | Dichtung |
| 145 | erste Schnittstelle |
| 150 | Temperatursensor |
| 155 | zweite Schnittstelle |
| 160 | Endeinrichtung |
| 165 | Speichervorrichtung |
| | |
| 200 | Verfahren zum Bestimmen einer aktuellen Fluidfüllung einer hydrodynamischen Kupplung |
| 205 | Abtasten Temperatur |
| 210 | Bestimmen Wärmeleistung |
| 215 | Bestimmen Lambda-Wert $\lambda_A$ |
| 220 | Bestimmen Füllgrad |

| 300 | Verfahren zum Bestimmen einer aktuellen Füllung einer hydrodynamischen Kupplung mit Fluid im stationären Betrieb |
| 305 | Initialisierungsschritt |
| 310 | Abtasten Temperatur |
| 315 | Bestimmen Füllgrad |
| 400 | Verfahren zum Bestimmen einer über eine hydrodynamische Kupplung übertragenen Leistung |
| 405 | Initialisierungsschritt |
| 410 | Betriebsmedium |
| 415 | |
| 420 | Dichtungsmaterial umfasst Viton? |
| 425 | |
| 430 | |
| 435 | |
| 440 | |
| 445 | Abtasten Temperatur |
| 450 | Bestimmen übertragene Leistung |
| 500 | Verfahren zum Bestimmen einer verbleibenden Lebensdauer eines Fluids einer hydrodynamischen Kupplung |
| 505 | Initialisieren: Bestimmen Art des Fluids |
| 510 | Abtasten Temperatur |
| 515 | Bestimmen aktueller Belastungswert |
| 520 | Aufsummieren |
| 525 | Nutzungsgrad bestimmen |
| 530 | ggf. Meldung ausgeben |
| 535 | Tabelle Mineralöl |
| 540 | Tabelle Synthetiköl |
| 600 | Verfahren zum Bestimmen einer verbleibenden Lebensdauer eines Wälzlagers |
| 605 | Initialisieren |
| 610 | erstes Diagramm |
| 615 | zweites Diagramm |
| 620 | Abtasten Temperatur |
| 625 | Bestimmen Temperaturfaktor |
| 630 | Bestimmen Zeitverhältnis Anfahrhäufigkeit |
| 635 | Bestimmen Anfahrhäufigkeitsfaktor |
| 640 | Bestimmen Schlupffaktor |
| 645 | Bestimmen Lebensdauer |
| 700 | Verfahren zum Bestimmen einer Zeit bis zum nächstmöglichen Hochlaufen einer hydrodynamischen Kupplung |
| 705 | Initialisierungsschritt |
| 710 | Abtasten Temperatur |
| 715 | Bestimmen Wartezeit |

**Patentansprüche**

1. Verfahren (200) zum Bestimmen eines Füllgrads an Fluid (130) in einer hydrodynamischen Kupplung (105), wobei die Kupplung (105) eine Eingangsseite (115) und eine Ausgangsseite (120) umfasst, deren Drehbewegungen mittels des hydraulischen Fluids (130) miteinander gekoppelt sind, und wobei das Verfahren folgende Schritte umfasst:

   - periodisches Abtasten (205) einer Fluidtemperatur des hydraulischen Fluids (130);
   - Bestimmen (210) einer der Kupplung (105) zugeführten Wärmeleistung auf der Basis einer Aufheizgeschwindigkeit des Fluids (130);
   - Bestimmen (215) eines Lambda-Werts auf der Basis der Wärmeleistung; und
   - Bestimmen (220) des Füllgrads auf der Basis des Lambda-Werts

2. Verfahren (200, 400) nach Anspruch 1, wobei die der Kupplung (105) zugeführte Leistung auf der Basis einer über die Kupplung (105) übertragenen Leistung bestimmt wird und das Bestimmen der über die Kupplung (105) übertragenen Leistung folgende Schritte umfasst:

- Bestimmen (410-440) einer maximal zulässigen Temperatur der Kupplung (105);
- Bestimmen (445) einer Umgebungstemperatur einer Umgebung der Kupplung (105);
- Bestimmen (450) der über die Kupplung (105) übertragenen Leistung auf der Basis der Fluidtemperatur und der Umgebungstemperatur.

3. Verfahren (200, 500) nach Anspruch 1 oder 2, wobei ferner eine verbleibende Lebensdauer des Fluids (130) bestimmt wird und das Verfahren (200, 500) folgende weitere Schritte umfasst:

- Bestimmen (515) von Belastungen des Fluids (130) für die abgetasteten Temperaturen;
- Bestimmen (520) einer Summe der Belastungen; und
- Bestimmen (535, 540) der verbleibenden Lebensdauer auf der Basis der Summe.

4. Verfahren (200, 600) nach einem der vorangehenden Ansprüche, wobei ferner eine verbleibende Lebensdauer eines Wälzlagers (135) zur Lagerung der Eingangsseite (115) gegenüber der Ausgangsseite (120) bestimmt wird und das Verfahren folgende weitere Schritte umfasst:

- Bestimmen (625) von Belastungen des Wälzlagers auf der Basis der abgetasteten Temperaturen;
- Bestimmen (625) einer Summe der Belastungen; und
- Bestimmen (645) der verbleibenden Lebensdauer auf der Basis der Summe.

5. Verfahren (200, 600) nach Anspruch 4, wobei eine Anfahrhäufigkeit (630, 635) berücksichtigt wird.

6. Verfahren (200, 600) nach Anspruch 4 oder 5, wobei ein Schlupf zwischen der Eingangsseite (115) und der Ausgangsseite (120) berücksichtigt (640) wird.

7. Computerprogrammprodukt mit Programmcodemitteln zur Durchführung eines Verfahrens (200, 400, 500, 600) nach einem der vorangehenden Ansprüche, wenn das Computerprogrammprodukt auf einer Verarbeitungseinrichtung (110) abläuft oder auf einem computerlesbaren Datenträger gespeichert ist.

8. Steuervorrichtung (110) zur Bestimmung eines Betriebszustands einer hydrodynamischen Kupplung (105), wobei die Kupplung (105) eine Eingangsseite (115) und eine Ausgangsseite (120) umfasst, deren Drehbewegungen mittels eines hydraulischen Fluids (130) miteinander gekoppelt sind, und wobei die Steuervorrichtung folgendes umfasst:

- eine Schnittstelle (145) zur Verbindung mit einem Temperatursensor (150), der zur periodischen Abtastung der Temperatur des hydraulischen Fluids (130) eingerichtet ist; und
- eine Verarbeitungseinrichtung (110) zur Bestimmung einer der Kupplung (105) zugeführten Wärmeleistung auf der Basis einer Aufheizgeschwindigkeit des Fluids (130), eines Lambda-Werts auf der Basis der Wärmeleistung, sowie des Füllgrads auf der Basis des Lambda-Werts.

9. Kupplungssystem (100), umfassend:

- eine hydrodynamische Kupplung (105) mit einer Eingangsseite (115) und einer Ausgangsseite (120), deren Drehbewegungen mittels eines hydraulischen Fluids (130) miteinander gekoppelt sind;
- einen Temperatursensor (150) zur periodischen Abtastung einer Temperatur des hydraulischen Fluids (130); und
- eine Steuervorrichtung (110) nach Anspruch 8.

## Claims

1. Method (200) for determining a degree of filling of fluid (130) in a hydrodynamic clutch (105), the clutch (105) comprising an input side (115) and an output side (120), the rotational movements of which are coupled to one another by means of the hydraulic fluid (130), and the method comprising the following steps:

- periodically sensing (205) a fluid temperature of the hydraulic fluid (130);

- determining (210) a thermal output supplied to the clutch (105) on the basis of a heating-up rate of the fluid (130);
- determining (215) a lambda value on the basis of the thermal output; and
- determining (220) the degree of filling on the basis of the lambda value.

2. Method (200, 400) according to Claim 1, the power supplied to the clutch (105) being determined on the basis of a power transferred via the clutch (105) and the determination of the power transferred via the clutch (105) comprising the following steps:

- determining (410-440) a maximum permissible temperature of the clutch (105);
- determining (445) an ambient temperature of an area surrounding the clutch (105);
- determining (450) the power transferred via the clutch (105) on the basis of the fluid temperature and the ambient temperature.

3. Method (200, 500) according to Claim 1 or 2, a remaining life span of the fluid (130) also being determined and the method (200, 500) comprising the following further steps:

- determining (515) loads on the fluid (130) for the sensed temperatures;
- determining (520) a sum of the loads; and
- determining (535, 540) the remaining life span on the basis of the sum.

4. Method (200, 600) according to one of the preceding claims, a remaining life span of an antifriction bearing (135) for mounting the input side (115) with respect to the output side (120) also being determined and the method comprising the following further steps:

- determining (625) loads on the antifriction bearing on the basis of the sensed temperatures;
- determining (625) a sum of the loads; and
- determining (645) the remaining life span on the basis of the sum.

5. Method (200, 600) according to Claim 4, a frequency of starts (630, 635) being taken into account.

6. Method (200, 600) according to Claim 4 or 5, slippage between the input side (115) and the output side (116) being taken into account (640).

7. Computer program product with program coding means for carrying out a method (200, 400, 500, 600) according to one of the preceding claims when the computer program product runs on a processing device (110) or is stored on a computer-readable data medium.

8. Control device (110) for determining an operating state of a hydrodynamic clutch (105), the clutch (105) comprising an input side (115) and an output side (120), the rotational movements of which are coupled to one another by means of a hydraulic fluid (130), and the control device comprising the following:

- an interface (145) for connecting to a temperature sensor (150), which is designed for periodically sensing the temperature of the hydraulic fluid (130); and
- a processing device (110) for determining a thermal output supplied to the clutch (105) on the basis of a heating-up rate of the fluid (130), a lambda value on the basis of the thermal output, and the degree of filling on the basis of the lambda value.

9. Clutch system (100), comprising:

- a hydrodynamic clutch (105) having an input side (115) and an output side (120), the rotational movements of which are coupled to one another by means of a hydraulic fluid (130);
- a temperature sensor (150) for periodically sensing a temperature of the hydraulic fluid (130); and
- a control device (110) according to Claim 8.

**Revendications**

1. Procédé (200) de détermination du niveau de remplissage en fluide (130) d'un accouplement hydrodynamique (105), l'accouplement (105) comportant un côté d'entrée (115) et un côté de sortie (120) dont les déplacements de rotation sont accouplés l'un à l'autre au moyen du fluide hydraulique (130), le procédé comportant les étapes suivantes :

- échantillonnage périodique (205) de la température du fluide hydraulique (130),
- détermination (210) de la puissance thermique apportée à l'accouplement (105) sur la base de la vitesse d'échauffement du fluide (130),
- détermination (215) de la valeur de lambda sur la base de la puissance thermique et
- détermination (220) du degré de remplissage sur la base de la valeur de lambda.

2. Procédé (200, 400) selon la revendication 1, dans lequel la puissance apportée à l'accouplement (105) est déterminée sur la base de la puissance transmise par l'intermédiaire de l'accouplement (105), la détermination de la puissance transmise par l'intermédiaire de l'accouplement (105) comportant les étapes suivantes :

- détermination (410-440) de la température maximale admissible de l'accouplement (105),
- détermination (445) de la température de l'environnement de l'accouplement (105) et
- détermination (450) de la puissance transmise à l'accouplement (105) sur la base de la température du fluide et de la température de l'environnement.

3. Procédé (200, 500) selon les revendications 1 ou 2, dans lequel la durée de vie résiduelle du fluide (130) est déterminée, le procédé (200, 500) comportant les étapes supplémentaires suivantes :

- détermination (515) des contraintes imposées au fluide (130) pour les températures échantillonnées,
- détermination (520) de la somme des contraintes et
- détermination (535, 540) de la durée de vie résiduelle sur la base de la somme.

4. Procédé (200, 600) selon l'une des revendications précédentes, dans lequel la durée de vie résiduelle d'un palier de roulement (135) qui monte le côté d'entrée (115) par rapport au côté de sortie (120) est déterminée, le procédé comportant les étapes supplémentaires suivantes :

- détermination (625) des contraintes appliquées sur le palier de roulement sur la base des températures échantillonnées,
- détermination (625) de la somme des contraintes et
- détermination (645) de la durée de vie résiduelle sur la base de la somme.

5. Procédé (200, 600) selon la revendication 4, qui tient compte de la fréquence (630, 635) des démarrages.

6. Procédé (200, 600) selon les revendications 4 ou 5, qui tient compte (640) du patinage entre le côté d'entrée (115) et le côté de sortie (120).

7. Produit de programme informatique doté de moyens de code de programme permettant la mise en oeuvre d'un procédé (200, 400, 500, 600) selon l'une des revendications précédentes lorsque le produit de programme informatique est exécuté sur un dispositif de traitement (110) et/ou est conservé en mémoire sur un support de données lisible par ordinateur.

8. Ensemble de commande (110) permettant de détermination l'état de fonctionnement d'un accouplement hydrodynamique (105), l'accouplement (105) comportant un côté d'entrée (115) et un côté de sortie (120) dont les déplacements de rotation sont accouplés l'un à l'autre au moyen d'un fluide hydraulique (130), le dispositif de commande comportant :

- une interface (145) permettant la liaison à un capteur de température (150) conçu pour échantillonner périodiquement la température du fluide hydraulique (130) et
- un dispositif de traitement (110) permettant de déterminer la puissance thermique apportée au l'accouplement (105) sur la base de la vitesse d'échauffement du fluide hydraulique (130), la valeur de lambda sur la base de la puissance thermique et le degré de remplissage sur la base de la valeur de lambda.

9. Système d'accouplement (100) comprenant :

- un accouplement (105) doté d'un côté d'entrée (115) et d'un côté de sortie (120) dont les déplacements de rotation sont accouplés l'un à l'autre au moyen d'un fluide hydraulique (130),
- un capteur de température (150) permettant d'échantillonner périodiquement la température du fluide hydraulique (130) et
- un dispositif de commande (110) selon la revendication 8.

100    105

115

140    120

135    125

135

140

165    130

145

110    150

155    160

# Fig. 1

200

```
┌─────────────────────┐
│         205         │
└─────────────────────┘
           │
           ▼
┌─────────────────────┐
│         210         │
└─────────────────────┘
           │
           ▼
┌─────────────────────┐
│         215         │
└─────────────────────┘
           │
           ▼
┌─────────────────────┐
│         220         │
└─────────────────────┘
```

# Fig. 2

300

```
┌─────────────────────┐
│         305         │
└─────────────────────┘
           │
           ▼
┌─────────────────────┐
│         310         │
└─────────────────────┘
           │
           ▼
┌─────────────────────┐
│         315         │
└─────────────────────┘
```

# Fig. 3

400

Fig. 4

500

505

510

515

520

525

530

| $\vartheta_{VTK}$ [ °C] | X [-] |
|---|---|
| ≤67 | 1 |
| >67 ...≤ 82 | 2 |
| >82 ... ≤97 | 4 |
| >97 ... ≤ 112 | 8 |
| >112 ... ≤ 127 | 16 |
| > 127 ... ≤ 142 | 32 |
| > 142 ... ≤ 157 | 64 |
| > 157 | 128 |

535

| $\vartheta_{VTK}$ [ °C] | X[-] |
|---|---|
| ≤55 | 1 |
| > 55 ... ≤ 65 | 2 |
| > 65 ... ≤ 75 | 4 |
| > 75 ... ≤ 85 | 8 |
| > 85 ... ≤ 95 | 16 |
| > 95 ... ≤ 105 | 32 |
| > 105 ... ≤ 115 | 64 |
| > 115 ... ≤ 125 | 128 |
| > 125 ... ≤ 135 | 256 |
| > 135 ... ≤ 145 | 512 |
| > 145 ... ≤ 155 | 1024 |
| > 155 ... ≤ 165 | 2048 |
| >165 | 4096 |

540

# Fig. 5

600

610

$L_{10h}$' [h]

n [1/min]

615

$L_{10h}$' [h]

n[1/min]

605

620

625

630

635

640

645

Fig. 6

700

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4073139 A